# EUROPÄISCHE PATENTSCHRIFT

(11) **EP 3 771 627 B1**
(45) Veröffentlichungstag und Bekanntmachung des Hinweises auf die Patenterteilung: **08.06.2022**
(21) Anmeldenummer: 19189630.7
(22) Anmeldetag: 01.08.2019
(51) Int. Cl.: B62M 6/90, B62K 19/40, H01M 50/20, B62J 43/13, B62J 43/23

(54) **ELEKTROFAHRRAD- AKKUHALTERUNGSENSEMBLE**
ELECTRIC BICYCLE HOLDER BATTERY HOLDER ENSEMBLE
ENSEMBLE DE MAINTIEN D'ACCUMULATEUR DE BICYCLETTES ÉLECTRIQUES

(43) Veröffentlichungstag der Anmeldung: 03.02.2021
(73) Patentinhaber: Amprio GmbH, 41460 Neuss (DE)
(72) Erfinder: HEMSING, Axel, 41460 Neuss (DE); PLIKAT, Tobias, 41460 Neuss (DE); PRIES, Holger, 41460 Neuss (DE)
(74) Vertreter: terpatent Patentanwälte ter Smitten Eberlein-Van Hoof Rütten Daubert

(56) Entgegenhaltungen:
- EP-A1- 3 566 940
- DE-A1-102017 005 434
- DE-B3-102016 213 903
- DE-U1-202016 104 156

## Beschreibung

Die Erfindung bezieht sich auf ein Elektrofahrrad-Akkuhalterungsensemble zum zweistufigen Entriegeln eines Traktionsakkumulators von einem Elektrofahrrad-Rahmenteil.

Unter einem Elektrofahrrad sind vorliegend alle Zweiräder oder Dreiräder zu verstehen, die einen elektrischen Traktionsakkumulator aufweisen, der bedarfsweise von einem Rahmenteil des Elektrofahrrads abgenommen werden kann, beispielsweise, um den Traktionsakkumulator räumlich getrennt von dem Elektrofahrrad aufladen zu können.

Hierzu weist das Elektrofahrrad ein Akkuhalterungsensemble auf, das es erlaubt, den Traktionsakkumulator mit wenigen Handgriffen von dem Elektrofahrrad-Rahmenteil zu entfernen. Wenn der Traktionsakkumulator hängend an einem Rahmenteil befestigt ist, besteht beim Öffnen einer Akkuverriegelung grundsätzlich die Gefahr, dass der mindestens mehrere Kilogramm wiegende Traktionsakkumulator unkontrolliert aus der Akkuhalterung herausfällt, bevor er ergriffen wird.

Ein Akkuhalterungsensemble mit zweistufiger Entriegelung ist aus DE 20 2016 104 156 U1 bekannt. Hierzu weist das Akkuhalterungsensemble eine Verriegelungshalterung auf, die aus einem rahmenteil-seitigen Rahmenhaltemodul und aus einem akkuseitigen Akkuhaltemodul besteht. Das Rahmenhaltemodul weist einen beweglichen Verriegelungs-Riegel und einen separaten beweglichen Verliersicherungs-Riegel auf, die beide jeweils in eine korrespondierende starre Verriegelungsstufe und eine korrespondierende starre Verliersicherungs-Stufe an dem Akkuhaltemodul eingreifen. Zur Entriegelung des Traktionsakkumulators wird zunächst der Verriegelungsriegel entriegelt, sodass der Traktionsakkumulator sich in seine Verliersicherungs-Position bewegt. Aus der Verliersicherungs-Position kann der Traktionsakkumulator erst entnommen werden, wenn der Verliersicherungs-Riegel entriegelt wird.

Aus DE 10 2016 213 903 B3 ist ein Akkuhalterungsensemble entsprechend der Präambel des Anspruchs 1 bekannt, bei dem der bewegliche Verriegelungsriegel an dem Rahmenhaltemodul und der bewegliche Verliersicherungs-Riegel an der Akkuhalterung vorgesehen ist, der in der Verliersicherungs-Position mit einer korrespondierenden starren Verliersicherungs-Stufe an dem Rahmenhaltemodul zusammengreift und zur Entriegelung manuell in Akku-Längsrichtung betätigt werden muss.

Aufgabe der Erfindung ist es vor diesem Hintergrund, ein vereinfachtes Elektrofahrrad-Akkuhalterungsensemble zur zweistufigen Entriegelung des Traktionsakkumulators zu schaffen.

Diese Aufgabe wird erfindungsgemäß gelöst mit einem Elektrofahrrad-Akkuhalterungsensemble mit den Merkmalen des Anspruchs 1.

Das erfindungsgemäße Elektrofahrrad-Akkuhalterungsensemble erlaubt ein zweistufiges Entriegeln eines entfernbaren Traktionsakkumulators von einem Elektrofahrrad-Rahmenteil. Das Akkuhalterungsensemble weist eine Verriegelungshalterung an einem Längsende des Traktionsakkumulators und eine Gegenhalterung an dem anderen Längsende des Traktionsakkumulators auf. Die Gegenhalterung weist bevorzugt keine weiteren beweglichen Halterungselemente auf, sondern weist eine starre Struktur auf, die ein Ein- und Aushaken der betreffenden Stirnseite des Traktionsakkumulators durch eine entsprechende Bewegung des Traktionsakkumulators in die bzw. aus der Gegenhalterung erlaubt.

Die Verriegelungshalterung besteht aus einem rahmenteilseitigen Rahmenhaltemodul und aus einem akkuseitigen Akkuhaltemodul, das mit dem Rahmenhaltemodul in einer Verriegelungsposition des Traktionsakkumulators verriegelnd und in einer ausgerückten und davon abweichenden Verliersicherungs-Position des Traktionsakkumulators verliersichernd zusammenwirkt. Das Rahmenhaltemodul weist einen zwischen einer Verriegelungsposition und einer Entriegelungsposition beweglichen Verriegelungsriegel auf. Das Akkuhaltemodul weist eine Verriegelungsstufe auf, die mit dem Verriegelungsriegel verriegelnd zusammenwirkt, und weist einen separaten Verliersicherungs-Riegel auf, der zwischen einer Verliersicherungs-Position und einer Nicht-Verliersicherungs-Position beweglich ist.

In der Verriegelungsposition ist der Traktionsakkumulator in seiner Verriegelungsposition verriegelt, in der der Traktionsakkumulator elektrisch mit anderen elektrischen Komponenten des Elektrofahrrads verbunden ist, beispielsweise mit einer Antriebssteuerung des Elektrofahrrads. In der Verliersicherungs-Position ist der Traktionsakkumulator aus seiner Verriegelungsposition ausgerückt, kann jedoch noch nicht von dem betreffenden Elektrofahrrad-Rahmenteil entfernt werden, bevor nicht der separate Verliersicherungs-Riegel entriegelt ist.

Der mit der Verriegelungsstufe zusammenwirkende Verriegelungsriegel verriegelt den Traktionsakkumulator in der Verriegelungsposition und greift in der Verliersicherungs-Position mit dem Verliersicherungs-Riegel verliersichernd und nicht-verriegelnd zusammen. Der Verriegelungsriegel hat also eine Doppelfunktion, und dient sowohl in der VerriegelungsPosition des Traktionsakkumulators als eine Komponente der Verriegelung als auch in der Verliersicherungs-Position als eine Komponente der Verliersicherung. Da nur noch drei ineinandergreifende Elemente für die Realisierung sowohl der Verriegelung, als auch der Verliersicherung erforderlich sind, ist der Aufbau der Verriegelungshalterung vereinfacht.

Vorzugsweise ist vorgesehen, dass der Verliersicherungs-Riegel eine Verliersicherungs-Nase aufweist, die im Wesentlichen in seitlicher Richtung und quer zur Akku-Entnahmerichtung zwischen der Verliersicherungs-Position und der ungesicherten Position beweglich ist. Unter einer seitlichen Richtung ist die Bewegungsrichtung zu verstehen, die ungefähr in der Ebene der betreffenden Stirnseite des Traktionsakkumulators liegt, also in einer Querebene des Traktionsakkumulators liegt, und die ungefähr senkrecht zur Akku-Bewegungsrichtung beim schwenkenden Entnehmen oder beim Einsetzen des Traktionsakkumulators orientiert ist. Die Länge der Entsicherungsbewegung des Verliersicherungs-Riegels hat daher keinerlei Auswirkung auf die Gesamtlänge des Traktionsakkumulators einschließlich des Akkuhaltemoduls, sodass ein in Längsrichtung kompakter Traktionsakkumulator realisiert ist. Da der Verliersicherungs-Riegel zum Öffnen in seitlicher Querrichtung bewegt wird, kann der Bediener seine Hand in der Gegen-Querrichtung an dem Traktionsakkumulator oder an der Verriegelungshalterung abstützen. Hierdurch wird die Handhabung der Verliersicherung vereinfacht, da der Benutzer nur relativ geringe manuelle Öffnungskräfte zum Öffnen der Verliersicherung aufbringen muss.

Gemäß einer bevorzugten Ausgestaltung der Erfindung ist der Verliersicherungs-Riegel ein Schwenkriegel mit einer distalen Grifffläche, die in der Verliersicherungs-Position in Längsrichtung frei zugänglich ist. Die distale Riegel-Grifffläche ist also in der Verliersicherungs-Position sowohl in Längsrichtung als auch in Querrichtung frei und gut zugänglich, ist jedoch in der Verriegelungsposition in Längsrichtung nicht zugänglich. Unter "distal" ist vorliegend die Entnahmerichtung zu verstehen, also die Richtung, in der der Traktionsakkumulator im Bereich der Verriegelungshalterung von dem Elektrofahrrad-Rahmenteil entfernt wird.

Vorzugsweise ist der Verliersicherungs-Riegel annähernd mittig angelenkt, sodass der Hebelarm zwischen dem Verliersicherungs-Riegelgelenk und der distalen Grifffläche ungefähr genauso lang ist wie der Hebelarm zwischen dem Verliersicherungs-Riegelgelenk und der proximalen Verliersicherungs-Nase des Verliersicherungs-Riegels. Unter "gleichlang" ist eine maximale Abweichung von 30% voneinander zu verstehen. Hierdurch ist ein guter Kompromiss zwischen dem Entriegelungs-Betätigungsweg und den Entriegelungs-Betätigungskräften realisiert.

Gemäß einer bevorzugten Ausgestaltung der Erfindung weist der Verriegelungsriegel eine einzige Riegelnase auf, die mit der Verriegelungsstufe verriegelnd und mit dem Verliersicherungs-Riegel verliersichernd zusammengreift. Die Riegelnase des Verriegelungsriegels hat also eine Doppelfunktion, sodass trotz einer entsprechend stabilen Auslegung der Riegelnase der gesamte Konstruktions- und Herstellungsaufwand verringert ist gegenüber einer vielteiligen Konzeption.

Vorzugsweise ist dem Verliersicherungs-Riegel ein elastisches Spannelement zugeordnet, durch das der Verliersicherungs-Riegel in die Verriegelungsposition mechanisch vorgespannt ist. Hierdurch kann ein versehentliches Öffnen des Verliersicherungs-Riegels zuverlässig verhindert werden. Nach der Entriegelung der Verliersicherung springt der Verliersicherungs-Riegel selbsttätig wieder in seine Verriegelungsposition zurück.

Vorzugsweise ist dem Verriegelungsriegel ein elastisches Spannelement mechanisch zugeordnet, durch das der Verriegelungsriegel in seine Verriegelungsposition mechanisch vorgespannt ist. Zum Entriegeln muss der Verriegelungsriegel entgegen der Spannkraft des Spannelements betätigt werden, beispielsweise durch einen entsprechenden Schlüsselschalter. Nach der Entriegelung des Verriegelungsriegels springt der Verriegelungsriegel durch die Spannkraft des Spannelements in seine Verriegelungsposition zurück.

Gemäß einer bevorzugten Ausgestaltung des Akkuhalterungsensembles weist die Verriegelungsstufe ein separates Stufenschutz-Element aus Metall auf, auf dem der Verriegelungsriegel in seiner Verriegelungsposition unmittelbar abgestützt ist. Auf diese Weise kann das Akkuhaltemodul im Wesentlichen beispielsweise aus Kunststoff bestehen, wobei die Verriegelungsstufe durch das Vorsehen des metallischen Stufenschutz-Elements praktisch verschleißfrei ausgebildet ist und auch hohe Flächenkräfte beschädigungsfrei aufnehmen kann. Das Stufenschutz-Element kann beispielsweise aufgeklebt sein.

Im Folgenden wird ein Ausführungsbeispiel der Erfindung anhand der Figuren näher erläutert. Es zeigen:
Figur 1 schematisch ein Elektrofahrrad mit einem Akkuhalterungsensemble, das im Wesentlichen aus einer Verriegelungshalterung an einer Stirnseite des Traktionsakkumulators und einer Gegenhalterung an der anderen Stirnseite des Traktionsakkumulators besteht,
Figur 2 eine vergrößerte Darstellung der Verriegelungshalterung der Figur 1 im Verriegelungszustand,
Figur 3 die Verriegelungshalterung in der Figur 2 im Verliersicherungs-Zustand,
Figur 4 die Verriegelungshalterung der Figur 2 im nicht verliergesicherten Zustand, und
Figur 5 eine Ansicht der Stirnseite des Traktionsakkumulators mit dem Akkuhaltemodul der Verriegelungshalterung.

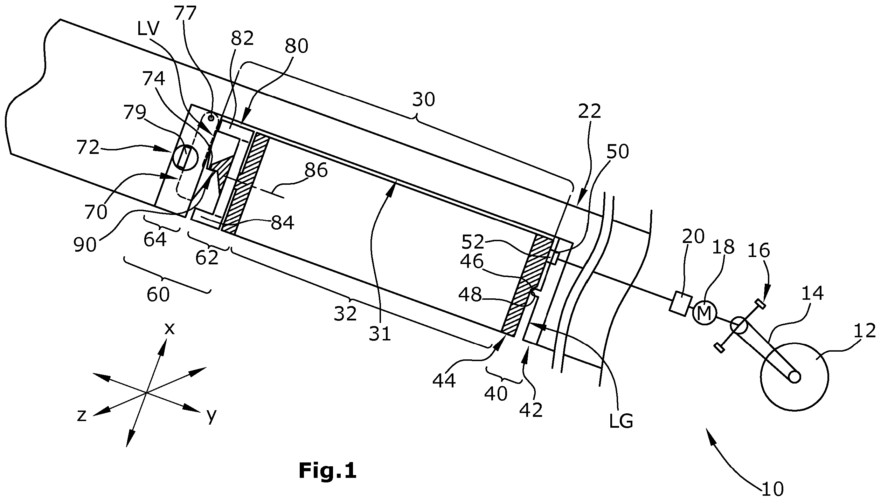

In der Figur 1 ist schematisch ein Elektrofahrrad 10 dargestellt, das beispielsweise als sogenanntes Pedelec ausgebildet sein kann. Das Elektrofahrrad 10 weist einen Fahrradrahmen auf, von dem vorliegend nur ein Rahmenteil 22 gezeigt ist, beispielsweise das ein Rahmenteil 22 eine steife Traverse zwischen dem Lenkerrohr und dem Sattelrohr des Fahrradrahmens bildet.

Das Elektrofahrrad 10 weist ein Antriebsrad 12 auf, beispielsweise das Hinterrad des Fahrrads 10. Das Antriebsrad 12 wird über eine Antriebskette 14 oder einen Antriebsriemen von einer Tretkurbel 16 angetrieben. Die Tretkurbel 16 wird ferner durch einen elektrischen Traktionsmotor 18 angetrieben, der durch eine Antriebssteuerung 20 mit elektrischer Energie versorgt wird. Die elektrische Energie erhält die Antriebssteuerung 20 von einem Traktionsakkumulator 30, der in seiner Gebrauchsposition in einer nach unten öffnenden Akku-Ausnehmung 31 in dem Rahmenteil 22 untergebracht ist.

Der Traktionsakkumulator 30 wird von einer Gegenhalterung 40 an einem Längsende LG des Traktionsakkumulators 30 und von einer Verriegelungshalterung 60 an dem anderen Längsende LV des Traktionsakkumulators 30 entnehmbar gehalten. Die beiden Stirnseiten des Traktionsakkumulators 30 bilden die jeweiligen Längsenden LV,LG des Traktionsakkumulators 30. Die Längsachse Y des Traktionsakkumulators 30 ist die Längsachse zwischen den beiden Längsenden LV,LG bzw. zwischen den beiden Stirnseiten des Traktionsakkumulators 30. Die Längsachse Y des Traktionsakkumulators ist nicht unbedingt die längste Seite des Traktionsakkumulators. Die Entnahmeachse X entspricht der Bewegungsrichtung des betreffenden Längsendes LV des Traktionsakkumulators 30 beim Entnehmen aus der Akku-Ausnehmung 31 bzw. beim Einsetzen des Traktionsakkumulators 30 in die Akku-Ausnehmung 31. Die Querachse Z ist die dritte Raumachse, die senkrecht zur Längsachse Y und senkrecht zur Entnahmeachse X orientiert ist.

Die Gegenhalterung 40 wird von einem rahmenteil-seitigen Rahmen-Gegenhaltemodul 42 und einem traktionsakku-seitigen Akku-Gegenhaltemodul 44 gebildet. Das Rahmen-Gegenhaltemodul 42 weist eine Gegenhalte-Nase 46 auf, die mit einer korrespondierenden Gegenhalte-Stufe 48 des Akku-Gegenhaltemoduls 44 hakenartig zusammengreift, wenn der Traktionsakkumulator 30 in seine Betriebsstellung eingesetzt und verriegelt ist. In diesem Zustand des Traktionsakkumulators 30 sind auch die beiden elektrischen Verbindungsstecker 50,52 der Gegenhalterung 40 elektrisch miteinander verbunden und kontaktiert, sodass die elektrische Energie des Traktionsakkumulators 30 der Antriebssteuerung 20 zur Verfügung steht, um den Traktionsmotor 18 mit elektrischer Energie zu versorgen.

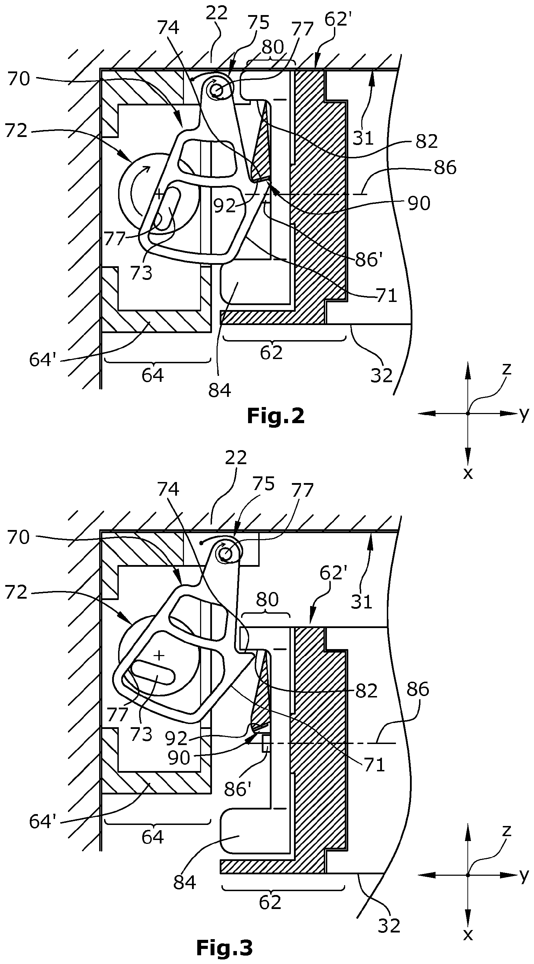

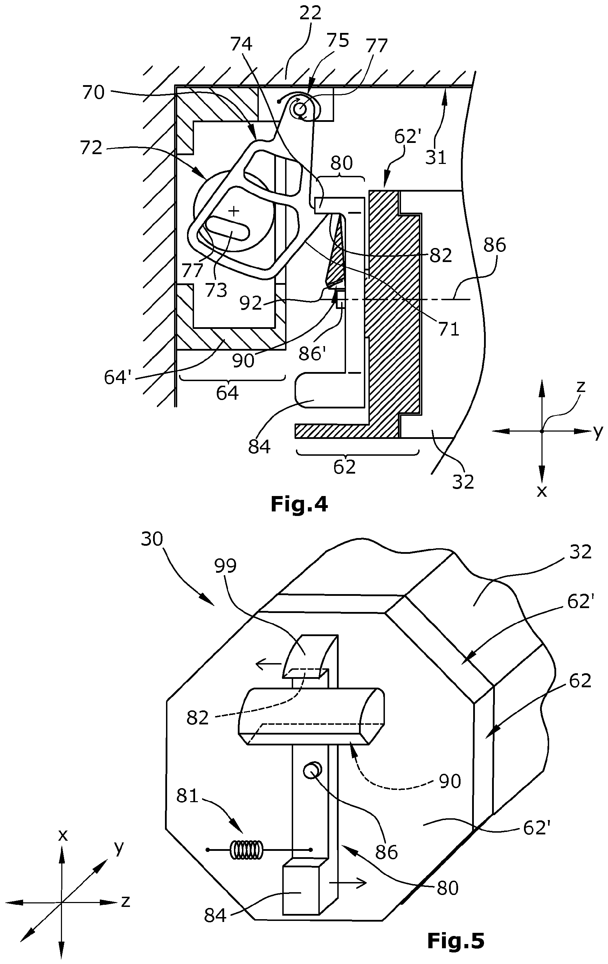

Die Verriegelungshalterung 60 an dem der Gegenhalterung 40 gegenüberliegenden Längsende LV des Traktionsakkumulators 30 besteht aus einem rahmenteil-seitigen Rahmenhaltemodul 64 und aus einem traktionsakku-seitigen Akkuhaltemodul 62, das mit dem Rahmenhaltemodul 64 in der in den Figuren 1 und 2 dargestellten Verriegelungsposition verriegelnd und in einer ausgerückten und davon abweichenden Verliersicherungs-Position, die in der Figur 3 dargestellt ist, verliersichernd zusammenwirkt. Der vollständig entriegelte Zustand der Verriegelungshalterung 60 ist in der Figur 4 dargestellt.

Der Traktionsakkumulator 30 besteht aus einem langgestreckten Batteriemodul 32, an dessen einem Längsende das Akku-Gegenhaltemodul 44 und an dessen anderem Längsende das Akkuhaltemodul 62 befestigt ist.

Die Verriegelungshalterung 60 wird im Wesentlichen von drei funktionalen Elementen gebildet, nämlich einem in Längsrichtung Y zwischen einer in der Figur 2 dargestellten Verriegelungsposition und einer Entriegelungsposition schwenkbaren Verriegelungsriegel 70, einer hiermit korrespondierenden starren Verriegelungsstufe 90 an dem Akkuhaltemodul 62 und einem separaten in Querrichtung Z schwenkbaren Verliersicherungs-Riegel 80 an dem Akkuhaltemodul 62. Der Verriegelungsriegel 70 weist eine Riegelnase 74 auf, die mit der Verriegelungsstufe 90 in der Betriebsstellung des Traktionsakkumulators 30 verriegelnd zusammengreift bzw. die Verriegelungsstufe 90 hintergreift.

Der Verriegelungsriegel 70 ist über ein Verriegelungsriegel-Gelenk 77 schwenkbar an einem Aluminium-Druckguss-Basiskörper 64' des Rahmenhaltemoduls 64 angelenkt. Dem Verriegelungsriegel 70 ist ein als Spiralfeder ausgebildetes Spannelement 75 zugeordnet, durch das der Verriegelungsriegel 70 in eine in den Figuren 1 und 2 dargestellte Verriegelungsposition elastisch vorgespannt ist. Der Basiskörper 64' ist in der Ausnehmung 31 fest mit dem Rahmenteil 22 verbunden, beispielsweise verschraubt.

In den Figuren 2-4 und insbesondere in der Figur 5 ist der Verliersicherungs-Riegel 80 dargestellt. Der aus Metall oder Kunststoff bestehende Verliersicherungs-Riegel 80 ist als Schwenkriegel ausgebildet, der ungefähr um eine durch einen Metall- Gelenkbolzen 86' definierte Schwenkachse 86 schwenkbar montiert ist. Der Gelenkbolzen 86' sitzt drehfest in einem Akkuhaltemodul-Grundkörper 62' aus Kunststoff. Dem Verliersicherungs-Riegel 80 ist ein vorliegend als Zug-Schraubenfeder ausgebildetes Spannelement 81 zugeordnet, durch das der Verliersicherungs-Riegel 80 in seine in der Figur 3 gezeigte Verriegelungsposition vorgespannt ist. Das Vorspannelement kann alternativ auch als Spiralfeder bzw. Schenkelfeder ausgebildet sein. Die Verriegelungsstufe 90 weist ein separates Stufenschutz-Element 92 aus Metall auf, sodass die Verriegelungsstufe 90 auf diese Weise verschleißfest ausgebildet ist.

An dem distalen Ende des Verliersicherungs-Riegels 80 ist eine in Querrichtung liegende distale Grifffläche 84 vorgesehen. Die Grifffläche 84 ist in der in Figur 3 dargestellten Verliersicherungs-Position aus der distalen Längsrichtung Y für einen Benutzer-Finger leicht zugänglich. An dem proximalen Ende des Verliersicherungs-Riegels 80 ist eine Verliersicherungs-Nase 82 vorgesehen, die in distaler Längsrichtung Y von dem Hebelarm des Verliersicherungs-Riegels 80 in Richtung Rahmenhaltemodul 64 absteht. In der in Figur 3 dargestellten Verliersicherungs-Position hintergreifen sich die Riegelnase 74 und die Verliersicherungs-Nase 82 derart, dass der Traktionsakkumulator 30 in dieser Position gegen eine weitere Bewegung aus der Ausnehmung 31 heraus blockiert ist.

Die Entriegelung des Verriegelungsriegels 70 erfolgt durch einen drehbaren Schloss-Exzenter 72, der einen exzentrischen Exzenternocken 73 aufweist, die in eine korrespondierende Kulisse 77 des Verriegelungsriegels 70 eingreift. Der Schloss-Exzenter 72 weist einen von außen zugänglichen Schlüssel-Schlitz 79 auf, in den ein korrespondierender Entriegelungs-Schlüssel eingesteckt werden kann, um den Schloss-Exzenter 72 so in eine Entriegelungsposition drehen zu können, dass der Verriegelungsriegel 70 durch den Exzenternocken 73 gegen die Federkraft des Spannelements 75 in die in der Figur 3 dargestellte Entriegelungsposition geschwenkt wird, so dass die Riegelnase 74 außer Eingriff kommt mit der Verriegelungsstufe 90. Hierdurch schwenkt der Traktionsakkumulator 30 durch die Schwerkraft, und/oder gegebenenfalls unterstützt durch ein entsprechendes Entriegelungs-Federelement, um den durch die Gegenhalte-Nase 46 und die Gegenhalterungsstufe 48 definierten Drehpunkt in Richtung der Entnahmeachse X nach unten aus der Akku-Ausnehmung 31, und wird in der in der Figur 3 dargestellten Verliersicherungs-Position angehalten.

Zum Öffnen der Verliersicherung betätigt der Bediener die Grifffläche 84 in Querrichtung Z derart, dass die Verliersicherungs-Nase 82 in Querrichtung außer Eingriff mit der Riegelnase 74 des Verriegelungsriegels 70 gebracht wird. Sobald das Verriegelungs-Längsende LV des Traktionsakkumulators 30 außerhalb der Akku-Ausnehmung 31 ist, kann der Traktionsakkumulator 30 in Längsrichtung Y vollständig aus der Akku-Ausnehmung 31 entnommen werden.

Das Einsetzen des Traktionsakkumulators 30 erfolgt umgekehrt, wobei der Verriegelungsriegel 70 eine Riegelschräge 71 und die Verliersicherungs-Nase 82 ebenfalls eine Schräge 99 aufweisen, die zunächst mit der Verliersicherungs-Nase 82 und anschließend mit der Verriegelungsstufe 90 nach Art einer Sperrklinke derart zusammenwirken, dass der Verriegelungsriegel 70 mit seiner Riegelnase 74 schließlich die Verriegelungsstufe 90 verriegelnd einrastend hintergreift.

## Patentansprüche

1. Elektrofahrrad-Akkuhalterungsensemble zum zweistufigen Entriegeln eines Traktionsakkumulators (30) von einem Elektrofahrrad-Rahmenteil (22), mit
einer Verriegelungshalterung (60) an einem Längsende (LV) des Traktionsakkumulators (30) und einer Gegenhalterung (40) an dem anderen Längsende (LG) des Traktionsakkumulators (30),
wobei die Verriegelungshalterung (60) aus einem rahmenteil-seitigen Rahmenhaltemodul (64) und aus einem traktionsakku-seitigen Akkuhaltemodul (62) besteht, das mit dem Rahmenhaltemodul (64) in einer Verriegelungsposition verriegelnd und in einer ausgerückten und davon abweichenden Verliersicherungs-Position verliersichernd zusammenwirkt,
wobei das Rahmenhaltemodul (64) einen zwischen einer Verriegelungsposition und einer Entriegelungsposition beweglichen Verriegelungsriegel (70) und das Akkuhaltemodul (62) eine Verriegelungsstufe (90) und einen separaten und zwischen einer Verliersicherungsposition und einer ungesicherten Position beweglichen Verliersicherungs-Riegel (80) aufweist, wobei der Verriegelungsriegel (70) mit der Verriegelungsstufe (90) verriegelnd zusammengreift,
**dadurch gekennzeichnet, dass**
der Verriegelungsriegel (70) mit dem Verliersicherungs-Riegel (80) verliersichernd und nicht-verriegelnd zusammengreift.

2. Elektrofahrrad-Akkuhalterungsensemble nach Anspruch 1, wobei der Verliersicherungs-Riegel (80) eine Verliersicherungs-Nase (82) aufweist, die im Wesentlichen in seitlicher Richtung (Z) und quer zur Akku-Entnahmerichtung (X) zwischen der Verliersicherungs-Position und der ungesicherten Position beweglich ist.

3. Elektrofahrrad-Akkuhalterungsensemble nach einem der vorangegangenen Ansprüche, wobei der Verliersicherungs-Riegel (80) ein Schwenkriegel mit einer distalen Grifffläche (84) ist, die in der Verliersicherungs-Position in Längsrichtung (Y) frei zugänglich ist.

4. Elektrofahrrad-Akkuhalterungsensemble nach Anspruch 3, wobei der Verliersicherungs-Riegel (80) annähernd mittig angelenkt ist.

5. Elektrofahrrad-Akkuhalterungsensemble nach einem der vorangegangenen Ansprüche, wobei der Verriegelungsriegel (70) eine einzige Riegelnase (74) aufweist, die mit der Verriegelungsstufe (90) verriegelnd und mit dem Verliersicherungs-Riegel (80) verliersichernd zusammengreift.

6. Elektrofahrrad-Akkuhalterungsensemble nach einem der vorangegangenen Ansprüche, wobei der Verliersicherungs-Riegel (80) durch ein elastisches Spannelement (81) in die Verliersicherungsposition mechanisch vorgespannt ist.

7. Elektrofahrrad-Akkuhalterungsensemble nach einem der vorangegangenen Ansprüche, wobei der Verriegelungsriegel (70) durch ein elastisches Spannelement (75) in seine Verriegelungsposition mechanisch vorgespannt ist.

8. Elektrofahrrad-Akkuhalterungsensemble nach einem der vorangegangenen Ansprüche, wobei die Verriegelungsstufe (90) ein separates Stufenschutz-Element (92) aus Metall aufweist, auf dem der Verriegelungsriegel (70) in der Verriegelungsposition abgestützt ist.

## Claims

1. Electric bicycle battery holder assembly for two-stage unlocking of a traction accumulator (30) from an electric bicycle frame portion (22), comprising
a locking bracket (60) at one longitudinal end (LV) of the traction accumulator (30) and a counter bracket (40) at the other longitudinal end (LG) of the traction accumulator (30),
wherein the locking bracket (60) consists of a frame holding module (64) at the frame part side and of a battery holding module (62) at the traction battery side, which cooperates with the frame holding module (64) in a locking manner in one locking position and in a loss preventing manner in a disengaged and different loss preventing position,
wherein the frame holding module (64) comprises a locking latch (70) movable between a locking position and an unlocking position and the battery holding module (62) comprises a locking step (90) and a separate loss-prevention latch (80) movable between a loss-prevention position and an unsecured position,
wherein the locking latch (70) lockingly engages the locking step (90),
**characterised in that**
the locking latch (70) engages the loss-prevention latch (80) in a loss-preventing and non-locking manner.

2. Electric bicycle battery holder assembly of claim 1, wherein the loss-prevention latch (80) comprises a loss-prevention lug (82) movable substantially in a lateral direction (Z) and transversely to the battery removal direction (X) between the loss-prevention position and the non-secured position.

3. Electric bicycle battery holder assembly according to any one of the preceding claims, wherein the loss-prevention latch (80) is a pivot latch having a distal gripping surface (84) that is freely accessible in the longitudinal direction (Y) in the loss-prevention position.

4. The electric bicycle battery holder assembly of claim 3, wherein the loss-prevention latch (80) is hinged approximately centrally.

5. Electric bicycle battery holder assembly of any one of the preceding claims, wherein the locking latch (70) comprises a single latch nose (74) that engages the locking step (90) in a locking manner and the loss-prevention latch (80) in a loss-preventing manner.

6. Electric bicycle battery holder assembly according to any one of the preceding claims, wherein the loss-prevention latch (80) is mechanically biased into the loss-prevention position by an elastic tensioning element (81).

7. Electric bicycle battery holder assembly according to any one of the preceding claims, wherein the locking latch (70) is mechanically biased into its locking position by a resilient biasing element (75).

8. Electric bicycle battery holder assembly according to any one of the preceding claims, wherein the locking step (90) comprises a separate step protection element (92) made of metal which supports the locking latch (70) in the locking position.

## Revendications

1. Ensemble de support de batterie de bicyclette électrique pour le déverrouillage en deux étapes d'un accumulateur de traction (30) à partir d'une partie de cadre de bicyclette électrique (22), comprenant
un support de fermeture (60) à une extrémité longitudinale (LV) de l'accumulateur de traction (30) et un contre-support (40) à l'autre extrémité longitudinale (LG) de l'accumulateur de traction (30), dans lequel le support de fermeture (60) se compose d'un module de maintien de cadre (64) du côté de la partie de cadre et d'un module de maintien de batterie (62) du côté de la batterie de traction, qui coopère avec le module de maintien de cadre (64) de manière à se fermer dans une position de fermeture et de manière à empêcher les pertes dans une position désengagée et une autre position d'empêchement des pertes,
dans lequel le module de maintien de cadre (64) comprend un verrou de fermeture (70) déplaçable entre une position de verrouillage et une position de déverrouillage et le module de maintien de batterie (62) comprend une marche de verrouillage (90) et un verrou de prévention des pertes séparé (80) déplaçable entre une position de prévention des pertes et une position non sécurisée, dans lequel le verrou de fermeture (70) s'engage de manière verrouillée dans la marche de fermeture (90),
**caractérisé en ce que**
le verrou de verrouillage (70) engage le verrou de prévention des pertes (80) d'une manière prévenant les pertes et non verrouillante.

2. Ensemble de support de batterie de bicyclette électrique selon la revendication 1, dans lequel le verrou de prévention des pertes (80) comprend un ergot de prévention des pertes (82) déplaçable substantiellement dans une direction latérale (Z) et transversalement à la direction de retrait de la batterie (X) entre la position de prévention des pertes et la position non sécurisée.

3. Ensemble de support de batterie de bicyclette électrique selon l'une quelconque des revendications précédentes, dans lequel le verrou de prévention des pertes (80) est un verrou pivotant ayant une surface de préhension distale (84) qui est librement accessible dans la direction longitudinale (Y) dans la position de prévention des pertes.

4. Ensemble de support de batterie de bicyclette électrique de la revendication 3, dans lequel le verrou de prévention des pertes (80) est articulé approximativement au centre.

5. Ensemble de support de batterie de bicyclette électrique de l'une quelconque des revendications précédentes, dans lequel le verrou (70) comprend un nez de verrou unique (74) qui engage la marche de fermeture (90) de manière à la verrouiller et le verrou de prévention des pertes (80) de manière à prévenir les pertes.

6. Ensemble de support de batterie de bicyclette électrique selon l'une quelconque des revendications précédentes, dans lequel le verrou de prévention des pertes (80) est sollicité mécaniquement dans la position de prévention des pertes par un élément de tension élastique (81).

7. Ensemble de support de batterie de bicyclette électrique selon l'une quelconque des revendications précédentes, dans lequel le verrou de fermeture (70) est sollicité mécaniquement dans sa position de fermeture par un élément de sollicitation élastique (75).

8. Ensemble de support de batterie de bicyclette électrique selon l'une quelconque des revendications précédentes, dans lequel la marche de fermeture (90) comprend un élément de protection de marche séparé (92) réalisé en métal qui supporte le verrou de fermeture (70) dans la position de fermeture.
